# EUROPÄISCHE PATENTANMELDUNG

(11) **EP 4 421 622 A1**
(43) Veröffentlichungstag der Anmeldung: **28.08.2024**
(21) Anmeldenummer: 23157748.7
(22) Anmeldetag: 21.02.2023
(51) Int. Cl.: G06F 8/61, G06F 21/53, G06F 9/445

(54) **VERFAHREN UND SYSTEM ZUR DURCHFÜHRUNG EINES INSTALLATIONSVORGANGS FÜR EINE ANWENDUNG AUF EINER LAUFZEITUMGEBUNG WÄHREND DES BETRIEBS EINES SYSTEMS UNTER ÜBERPRÜFUNG VON WÄHREND DES INSTALLATIONSVORGANGS DURCHZUFÜHRENDEN MODIFIKATIONEN AUF DER SYSTEMLAUFZEITUMGEBUNG**

(71) Anmelder: Siemens Aktiengesellschaft, 80333 München (DE)
(72) Erfinder: Falk, Rainer, 85586 Poing (DE); Feist, Christian Peter, 80689 München (DE); Hornung, Peter, 91054 Erlangen (DE); Mantel, Martin, 91325 Adelsdorf (DE); Pyka, Stefan, 85570 Markt Schwaben (DE); Sperl, Franz, 92526 Oberviechtach (DE); Zeschg, Thomas, 81543 München (DE)
(74) Vertreter: Siemens Patent Attorneys

(57) **Zusammenfassung**

Die Erfindung beansprucht ein computerimplementiertes Verfahren zur Durchführung eines Installationsvorgangs für eine Anwendung (APP) auf einer Laufzeitumgebung (P) während des Betriebs eines Systems (S) unter Überprüfung von während des Installationsvorgangs durchzuführenden Modifikationen auf der Laufzeitumgebung, aufweisend folgende Schritte:
a) Konfigurieren von wenigstens einem Installationsschutzprofil (AIIP) für die Laufzeitumgebung in Abhängigkeit einer zur Kontrolle des Installationsvorgangs bereitgestellten Installationsrichtlinie (AIP),
b) Durchführen eines Installationsvorgangs eines zu installierenden Installationspakets der Anwendung zu Überprüfungszwecken auf einer von der Laufzeitumgebung isolierten Prüflaufzeitumgebung unter Anwendung des wenigstens einen Installationsschutzprofils, das erlaubte und/oder verbotene Modifikationen auf der Laufzeitumgebung während des Installationsvorgangs festlegt
c) Überprüfen, ob der Installationsvorgang unter Einhaltung des Installationsschutzprofils durchgeführt worden ist,
d) Durchführung des Installationsvorgangs des zu installierenden Installationspakets auf der Laufzeitumgebung, wenn das Überprüfungsergebnis als positiv bewertet wird,
e) ansonsten Abweisen oder Abbrechen des Installationsvorgangs.

## Beschreibung

Die Erfindung betrifft ein Verfahren und System zur Durchführung eines Installationsvorgangs für eine Anwendung auf einer Laufzeitumgebung während des Betriebs eines Systems unter Überprüfung von während des Installationsvorgangs durchzuführenden Modifikationen auf der Systemlaufzeitumgebung und ein zugehöriges Computerprogrammprodukt.

Da industrielle Systeme (Steuergeräte, Industrie PCs, IoT-und Edge-Geräte, Cloud-Server) oft über einen langen Zeitraum im Feld verwendet werden, sind sie sich ständig ändernden Voraussetzungen und einem dynamischen Umfeld ausgesetzt. Um mit diesen Umständen umzugehen, werden vor allem neue Geräte so entwickelt, dass sie über die Nutzungszeit flexibel angepasst werden können, z.B. durch die Unterstützung von nachladbaren Applikationen bzw. Anwendungen bzw. Apps. Ein Nachladen einer Anwendung wird vor allem im Betrieb bzw. zur Laufzeit eines Systems bzw. Geräts durchgeführt.

Beispielsweise gibt es bei einer Industrial Edge, welche beispielsweise in https://new.siemens.com/de/de/produkte/automatisierung/themen felder/industrial-edge.html beschrieben ist, die Möglichkeit, dass diverse Hersteller unterschiedliche Apps z.B. in einem App-Store bereitstellen können, welche vom Betreiber des Gerätes auf dem Gerät installiert werden. Als Folge eines möglichst breiten Angebots können Applikationen gegebenenfalls von unterschiedlichen Herstellern unterschiedliche Formate (z.B. Docker Container, Debian Pakete, einfaches tar-Archiv) annehmen, sowie eine unterschiedlich tiefe Integration mit dem System (z.B. wenig Rechte, sehr invasive Rechte) voraussetzen. Somit werden stärkere Anforderungen an die Security-Mechanismen eines solchen Gerätes gestellt. Insbesondere setzt ein sicherer Betrieb einen kontrollierten Installationsprozess für eine Applikation voraus. Ein Anwendungsentwickler bestimmt dabei mit einem gewissen Freiheitsgrad, welche Teile einer Gerätelaufzeitumgebung im Zuge des Installationsprozesses modifiziert werden. Dieser Freiheitsgrad kann vor allem je nach App-Format unterschiedlich groß sein. Beispielsweise können Debian-Pakete Installationsskripte enthalten, die durch den App-Entwickler bereitgestellt und mit höchsten Rechten auf dem System ausgeführt werden.

Es ist möglich, auf Systemebene Privilegien von einer oder mehreren Softwarekomponenten einzuschränken (siehe z.B. https://www.linux.com/learn/overview-linux-kernel-securityfeatures). Unter dem Betriebssystem Linux sind hier beispielsweise Mandatory Access Control (MAC, z.B. SELinux oder AppArmor), system call Filtering (seccomp), Linux capabilities, oder Virtualisierungsmechanismen (Namespaces) bekannt. Bei MAC werden z.B. Rechte von Applikationen mittels Zugriffsregeln in einer Policy (Richtlinie) definiert, welche anschließend durch den Betriebssystem-Kernel umgesetzt werden. Führt eine Applikation eine für sie nicht zulässige Operation aus, kann diese unterbunden oder gemeldet werden. Dies dient als Schutz gegen einen Angreifer, der Kontrolle über eine oder mehrere Applikationen besitzt. Insbesondere können diese Mechanismen auch zum Einschränken der Rechte eines root-Nutzers verwendet werden.
Package-Manager wie dpkg ermöglichen, zu erkennen, ob die Installation eines Anwendungspakets zum Überschreiben von Dateien führt, die zu einem anderen Anwendungspaket gehören (siehe z.B. https://askubuntu.com/questions/176121/dpkgerror-trying-to-overwrite-file-which-is-also-in) .
Bei Linux kann ein Auditing-Mechanismus, z.B. auditd (https://linux.die.net/man/8/auditd), verwendet werden, um Zugriffsereignisse (z.B. Schreibzugriff auf eine Datei durch eine Applikation) zu erkennen und zu melden. Diese werden anschließend in einer Logdatei, z.B. /var/log/audit/audit.log, hinterlegt. Unter dem Betriebssystem Windows kann eine Audit Policy konfiguriert werden, um z.B. Änderungen an bestimmten Dateien zu protokollieren (siehe https://blog.netwrix.com/2018/08/23/auditing-windowsserver/). Diese Ereignisse werden dann unter bestimmten Identifizierern in dem Windows Event Log-System abgespeichert, das betrachtet und ausgewertet werden kann.

Der Erfindung liegt daher die Aufgabe zugrunde, ein Verfahren und ein System derart auszugestalten, dass ein gegenüber dem Stand der Technik verbessertes Verfahren bzw. System zur Durchführung eines Installationsvorgangs für zumindest eine (nachladbare) Anwendung in einer Laufzeitumgebung entwickelt wird, wobei eine Kontrolle von während des Installationsvorgangs durchzuführenden Modifikationen gewährleistet werden soll.

Diese Aufgabe wird durch die Merkmale gemäß den unabhängigen Patentansprüchen gelöst. Vorteilhafte Ausführungsformen der vorliegenden Erfindung sind in den abhängigen Ansprüchen beschrieben.

Die Erfindung beansprucht ein (computerimplementiertes) Verfahren zur Durchführung eines Installationsvorgangs für eine Anwendung auf einer Laufzeitumgebung während des Betriebs eines Systems unter Überprüfung bzw. Kontrolle von während des Installationsvorgangs durchzuführenden Modifikationen auf der Systemlaufzeitumgebung, aufweisend folgende Schritte:
a) Konfigurieren und/oder Auswahl einer Konfiguration von wenigstens einem Installationsschutzprofil für die Laufzeitumgebung in Abhängigkeit einer zur Kontrolle des Installationsvorgangs bereitgestellten Installationsrichtlinie,
b) Durchführen eines Installationsvorgangs eines zu installierenden Installationspakets der Anwendung zu Überprüfungszwecken auf einer von der Laufzeitumgebung isolierten Prüflaufzeitumgebung unter Anwendung des wenigstens einen Installationsschutzprofils, das erlaubte und/oder verbotene Modifikationen auf der Laufzeitumgebung während des Installationsvorgangs festlegt,
c) Überprüfen, ob der Installationsvorgang unter Einhaltung des Installationsschutzprofils durchgeführt worden ist,
d) Durchführung des Installationsvorgangs des zu installierenden Installationspakets auf der Laufzeitumgebung, wenn das Überprüfungsergebnis als positiv bewertet wird,
e) ansonsten Abweisen oder Abbrechen des Installationsvorgangs.

Erfindungsgemäß wird ein App-Installationsmechanismus beschrieben, der in einer geschützten bzw. kontrollierten Laufzeitumgebung probehalber ausgeführt wird, um ungewollte Modifikationen des Systems durch die Installation zu verhindern. So wird die Installation von vorzugsweise nachladbaren Applikationen auf eine Art und Weise ermöglicht, mit der die Integrität des Restsystems sichergestellt werden kann.

Hierzu wird ein Installationsvorgang bzw. -prozess auf einer von der Systemlaufzeitumgebung isolierten Prüflaufzeitumgebung dahingehend überprüft, ob ein zuvor konfigurierbares Installationsschutzprofil eingehalten und nicht verletzt wurde. Beispielsweise kann eine Verletzung des Installationsschutzprofils dadurch hervorgerufen werden, wenn Operationen beispielsweise an einem Dateisystem durchgeführt werden, die nach dem Installationsschutzprofil nicht erlaubt sind.

Bei einer positiven Überprüfung kann der Installationsvorgang zu Ende geführt werden. Bei einer negativen Überprüfung wird der Installationsvorgang abgewiesen oder abgebrochen, d.h. er wird nicht zu Ende geführt.

Das Konfigurieren von wenigstens einem Installationsschutzprofil (AIIP) wird mit Hilfe von im Installationspaket umfassten Metadaten und/oder mit Hilfe von Zuständen und/oder Rechten der Laufzeitumgebung und/oder des Systems durchgeführt.

Die Prüflaufzeitumgebung kann auf dem System selbst isoliert von der Systemlaufzeitumgebung oder abgesetzt bzw. separat auf einem anderen System bereitgestellt werden.
Zur Kontrolle des Installationsvorgangs kann eine Installationssteuerungseinheit eingesetzt werden, die mit den Installationsschutzprofil(en) konfiguriert wird bzw. konfigurierbar ist.

Es kann auch begleitend zum Überprüfungsergebnis oder als Überprüfungsergebnis ein Protokoll geliefert werden, das während des Installationsvorgangs die durchgeführten Modifikationen protokolliert hat. Daraus ist dann ein positives bzw. negatives Überprüfungsergebnis ableitbar.

Das Überprüfungsergebnis kann kryptographisch attestiert werden.

Das Verfahren ist vorzugsweise rechner-/computergestützt bzw. computerimplementiert ausgebildet bzw. wird vorzugsweise rechner-/computergestützt bzw. computerimplementiert ausgeführt. Die Schritte des Verfahrens können beliebig oft wiederholt werden und Wiederholungen können ggf. anhand definierter Bedingungen, sei es ereignisorientiert oder zeitlich begrenzt, beendet werden.

Ein weiterer Aspekt der Erfindung ist ein System, geeignet zur Durchführung eines Installationsvorgangs für eine Anwendung (APP) auf einer Systemlaufzeitumgebung während des Betriebs eines Systems unter Überprüfung von während des Installationsvorgangs durchzuführenden Modifikationen auf der Systemlaufzeitumgebung, wobei das System derart ausgebildet ist, die oben genannten Schritte a) bis e) durchzuführen.

Des Weiteren kann ein Computerprogrammprodukt eingesetzt werden, umfassend ein nichtflüchtiges Speichermedium, auf dem ein ladbarer und ausführbarer Programmcode gespeichert ist, welcher das Verfahren nach einem der oben genannten Ausführungsformen in einer Prozessoreinheit insbesondere einer oder verteilt in mehreren Vorrichtungen nach einer der vorhergehend beschriebenen Ausführungsformen ausführt.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei das Erstellungsgerät mit den Programmbefehlen derart konfiguriert wird, dass die Ausführungsumgebung erstellt werden kann.

Das System bzw. Vorrichtungen, Einheiten bzw. Geräte und Computerprogramm(-produkte), welches einen ladbaren und ausführbaren Programmkode oder verteilt ladbare und ausführbare Programmkodemodule umfassen kann, können entsprechend der Weiterbildungen/Ausführungsformen des vorgenannten Verfahrens und deren Weiterbildungen/Ausführungsformen und umgekehrt ausgebildet sein.

Eine Ausführungsform der Erfindung sieht vor, dass in das System ein oder mehrere Einheiten bzw. Komponenten bzw. Einrichtungen integriert sein können und diese als eine Software-, Firmware- bzw. Hardware-Komponente ausgebildet sein können. Das System umfasst in der Regel wenigstens einen Prozessor, der auf Betriebssystemebene als Betriebssystemkern Operationen ausführen kann.

Bei einem Prozessor bzw. Prozessoreinheit kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit) oder um ein Multi-Chip-Modul handeln, insbesondere einen FPGA (engl. Field Programmable Gate Array) oder einen ASIC (anwendungsspezifische integrierte Schaltung, engl. Application-Specific Integrated Circuit), ein SoC (System on Chip) einen Grafikprozessor GPU (Graphics Processing Unit), einen Prozessor zur Auswertung eines neuronalen Netzes wie beispielsweise eine TPU (Tensor Processing Unit) oder einen DSP (Digitaler Signalprozessor, engl. Digital Signal Processor) handeln. Der Prozessor kann eine oder mehrere Rechenkerne (multi-core) aufweisen. Auch kann unter einem Prozessor ein virtualisierter Prozessor oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens oder anderer Aspekte und Teilaspekte der Erfindung implementiert. Der Prozessor kann einen Tamper-Schutz zum Schutz vor physikalischen Manipulationen aufweisen, z.B. Tamper-Sensoren zur Detektion physikalischer Angriffe.

### Ausführungsbeispiele der Erfindung

Ausführungsbeispiele des erfindungsgemäßen Verfahrens und Systems sind in den Zeichnungen beispielhaft dargestellt und werden anhand der nachfolgenden Beschreibung näher erläutert. Es zeigen:

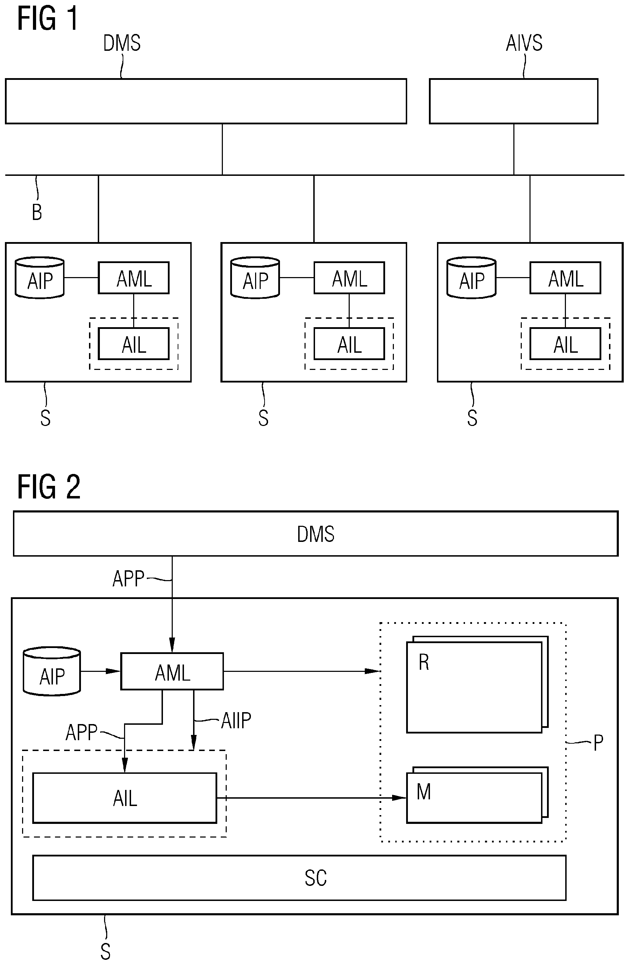

Die Figur 1 eine beispielhafte Anordnung, in deren Kontext das erfindungsgemäße Verfahren angewandt werden kann, und Figur 2 eine Ausprägung eines Systems, das geeignet ist, das erfindungsgemäße Verfahren durchzuführen.

Die Figur 1 zeigt eine Verwendung der Erfindung auf einem System S, das beispielsweise eine Automatisierungskomponente ist, welche das dynamische Hinzufügen bzw. Nachladen von Applikationen (Apps) während des Betriebs erlaubt.

Es können in einem Netzwerk einer industriellen Anlage mehrere solche Systeme über ein Bussystem / Netzwerk B miteinander verbunden sein.

Figur 2 zeigt das System S in einer gegenüber Figur 1 detaillierteren Ausführungsform. Eine App-Managementlogik (App Management Logic) AML auf dem System S empfängt ein App-Paket APP beispielsweise von einem App-Managementsystem DMS oder über einen am System eingesteckten USB-Stick. Die App-Managementlogik ist mit einer (App-)Installationsrichtlinie (App Installation Policy) AIP konfiguriert, ein entsprechendes Installationsschutzprofil AIIP für eine APP-Installationslogik AIL in einer Installationssteuerungseinheit (in der Figur 2 gestrichelt dargestellt) zu bestimmen. Bei der Konfiguration des Installationsschutzprofils bzw. einer Auswahl von ggf. vorhandenen (vorkonfigurierten) Konfigurationen können unterschiedlichste Faktoren berücksichtigt werden, wie z.B.
- Metadaten, die Signatur / Hersteller der App umfassen können oder Herkunft des App-Pakets (z.B. von welchem Server dieses geladen wurde)
- Eine Manifest-Datei des App-Pakets, in dem die durch die Installation durchgeführten Änderungen bzw. Modifikationen (z.B. zugegriffenen Pfade) auf dem System angegeben werden
- Inhalte der Installationsskripte des App-Pakets
- Rechte der Laufzeitumgebung, welche die App auf dem System benötigt,
- Aktueller Systemzustand (z.B. Setup- oder Wartungsmodus) und
- Informationen von bzw. über bereits installierte Komponenten

In der Regel wird ein Anwendungspaket bzw. APP-Paket APP zur Installation der Anwendung auf dem System S beispielsweise von einem App-Server, hier dem App-Managementsystem DML, erhalten, das auf Laufzeitumgebung P des Systems (in Figur 2 gepunktet dargestellt) oder zu Prüfzwecken auf der Prüflaufzeitumgebung installiert werden soll.
- Das App-Paket wird zur Konfiguration bzw. Auswahl eines geeigneten, Geräte-spezifischen Installationsschutzprofils AIIP überprüft. Das Installationsschutzprofil AIIP wird angewendet durch:
   o Starten eines App-Installationsvorgangs, das in Figur 2 mit R gekennzeichnet ist, mit Hilfe einer App-Installationsrichtlinie auf dem System in einer eingeschränkten Prüflaufzeitumgebung. Bei dieser Variante ist das Prüfsystem auf dem eigentlichen System selbst realisiert.
   ∘ Oder es wird das App-Paket an eine Prüflaufzeitumgebung auf einem separaten anderen System, das in Figur 1 mit AIVS gekennzeichnet ist, übermittelt, auf dem der Installationsvorgang in einer eingeschränkten Prüflaufzeitumgebung ausgeführt wird.
- Bei erfolgreicher Durchführung des Installationsvorgangs unter Einhaltung des Installationsschutzprofils, werden die durch den Installationsprozess ausgelösten Modifikationen übernommen bzw. die Modifikationen auf dem System angewendet, das in Figur 2 mit M gekennzeichnet ist.
- Bei nicht erfolgreicher Installation entsprechend des Installationsschutzprofils, wird der Installationsvorgang beendet oder abgebrochen. Es kann eine Ausgabe einer Fehlermeldung, etc. folgen.

Bei dem konfigurierten bzw. ausgewählten Installationsschutzprofil AIIP kann es sich in der Figur 2 z.B. um ein spezielles SELinux oder AppArmor Profil handeln, einer mittels Linux Namespaces und Bind-Mounts konfigurierten Sandbox-Umgebung, oder einer zusätzlichen Komponente zur Überwachung von Dateisystemzugriffen / der Integrität bestimmter Dateien. Die App-Installationslogik AIL wird nun zur Installation des App-Pakets (z.B. ein Debian-Paket app-package.deb) unter Anwendung des Installationsschutzprofils AIIP ausgeführt, beispielsweise durch das Ausführen des Kommandos dpkg -i app-package.deb unter dem ausgewählten AppArmor oder SELinux Profil. Dadurch werden auch sämtliche Installationsskripte des App-Pakets mit gezielt eingeschränkten Rechten ausgeführt. Das AppArmor oder SELinux Profil kann z.B. so definiert sein, dass Zugriffe auf bestimmte Kern-Teile SC des Systems (System core artefacts) wie z.B. /dev/mem oder dem Linux Kernel Abbild verboten werden. Werden Operationen, die durch das Installationsschutzprofil nicht erlaubt werden, erkannt, kann der Installationsvorgang abgebrochen werden.
Es können auch unterschiedliche App-Installationslogiken AIL bereitgestellt werden, die anhand des Installationsschutzprofils AIIP für das Durchführen der Installation ausgewählt werden. Beispielsweise können zwei unterschiedlich konfigurierte / kompilierte Versionen des Package-Managers dpkg vorgesehen werden, die sich in der durch sie modifizierbaren Dateisystempfade unterscheiden (entspricht einer in der App-Installationslogik AIL hartcodierten Richtlinie).
Die entsprechenden Installationsschutzprofile AIIP können vorkonfiguriert sein, oder zur Laufzeit generiert werden, z.B. in Abhängigkeit eines App-Manifests, in dem angegeben wird, welche Pfade für eine Installation modifiziert werden müssen. Die App-Installationsrichtlinie AIP und die davon abhängigen Installationsschutzprofile AIIP können insbesondere Geräte- bzw. System-spezifisch sein, so dass die für den jeweiligen Einsatzzweck eines Systems relevanten Schutzziele adressiert werden können.

Wenn die Überprüfung der Anwendung bzw. des App-Pakets auf einem abgesetzten Server, im Beispiel AIVS, durchgeführt wird, dann ist durch die App-Installationsrichtlinie AIP beispielsweise vorgegeben, dass die Installation von App-Paketen unbekannter Hersteller zunächst auf einem Server AIVS geprüft werden muss. Dazu übermittelt die App-Managementlogik AML das App-Paket, sowie das durch eine Installation einzuhaltende Installationsschutzprofil (z.B. bestimmte Pfade, die nicht modifiziert werden dürfen) an den Server AIVS. Dieser führt die Installation des App-Pakets in seiner Prüflaufzeitumgebung durch, die repräsentativ für das System S ist (z.B. gleiche Linux Distribution / Basis-Image, Digital Twin). Es wird überprüft, ob die Installation der App unter Einhalten des übermittelten Installationsschutzprofils durchgeführt werden konnte. Werden bei der Installation z.B. unerwünschte Modifikationen festgestellt, wird dies als Verletzung des Installationsschutzprofils bewertet. Das Überprüfungsergebnis wird an die App-Managementlogik AML zurückgemeldet. Diese kann darauf basierend entscheiden, die App auf dem System zu installieren, oder den Installationsvorgang ggf. abzubrechen.

Es ist möglich, dass der Server AIVS dem Prüfergebnis eine kryptographische Attestierung der Laufzeitumgebung beilegt. So kann die App-Managementlogik AML mit hoher Wahrscheinlichkeit davon ausgehen, dass die Installation in einer erwarteten, eingeschränkten Prüflaufzeitumgebung stattgefunden hat. Alternativ kann auch vor der Übermittlung des App-Pakets eine Attestierung durch den Server AIVS durchgeführt werden.

Wie oben bereits erwähnt, kann eine Prüfinstallation des App-Pakets auf einer geschützten, synthetischen Prüflaufzeitumgebung auch auf dem System selbst (z.B. in einer dedizierten virtuellen Maschine, Linux Container, speziellem tmpfs / Overlayfs-Struktur), oder z.B. dem App- / Device-Management System durchgeführt werden.
Von dem Server AIVS oder von der systeminternen Prüflaufzeitumgebung kann auch kein Überprüfungsergebnis, sondern ein Protokoll der Änderungen bzw. Modifikationen an der Laufzeitumgebung, z.B. durch einen Vergleich der Zustände vor und nach der Installation, Aufzeichnen von Dateizugriffen etc. ausgegeben werden. Die App-Managementlogik kann das Protokoll anschließend auswerten und entscheiden, ob das App-Paket auf dem System installiert werden soll.

Weiterhin können die Einschränkungen des Installationsschutzprofils auf die Laufzeitrechte von Apps übertragen werden. Wird beispielsweise im Installationsschutzprofil vorgegeben, dass Dateien unter /boot als Teil der Installation nicht verändert werden dürfen, kann diese Einschränkung auf eine systeminterne Prüflaufzeitumgebung, z.B. entsprechendes Laufzeitisolationsprofil (z.B. SELinux, AppArmor) der App übernommen werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen. Unter "rechner-/computergestützt" bzw. "computerimplementiert" kann im Zusammenhang mit der Erfindung beispielsweise eine Implementierung des Verfahrens verstanden werden, bei dem insbesondere ein Prozessor, der Teil der (Steuerungs-/Rechen-)-vorrichtung bzw. -einheit sein kann, mindestens einen Verfahrensschritt des Verfahrens ausführt. Das Verfahren kann hierbei auch in einer Rechnerwolke (Cloud) implementiert sein, die das Verfahren ausführen kann und damit Ergebnisse des Verfahrens an eine Steuerungs-/Rechen-)-vorrichtung bzw. -einheit liefern kann, die entsprechende Befehle bzw. Maßnahmen an die Vorrichtungen insbesondere der oben genannten Anordnung richten kann.

Sofern es in der nachfolgenden Beschreibung nicht anders angegeben ist, beziehen sich die Begriffe "abbilden", "nachbilden", "empfangen", "anwenden", "ausgeben", "bereitstellen" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt oder vorliegen können.

Der Begriff "Prozessor", "zentrale Signalverarbeitung", "Steuereinheit" oder "Datenauswertemittel", umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequenziellen Verarbeitung bzw. Ausführung von Instruktionen ausgelegt bzw. konfiguriert sein.

## Patentansprüche

1. Computerimplementiertes Verfahren zur Durchführung eines Installationsvorgangs für eine Anwendung (APP) auf einer Laufzeitumgebung (P) während des Betriebs eines Systems (S) unter Überprüfung von während des Installationsvorgangs durchzuführenden Modifikationen auf der Laufzeitumgebung, aufweisend folgende Schritte:
a) Konfigurieren von wenigstens einem Installationsschutzprofil (AIIP) für die Laufzeitumgebung in Abhängigkeit einer zur Kontrolle des Installationsvorgangs bereitgestellten Installationsrichtlinie (AIP),
b) Durchführen eines Installationsvorgangs eines zu installierenden Installationspakets der Anwendung zu Überprüfungszwecken auf einer von der Laufzeitumgebung isolierten Prüflaufzeitumgebung unter Anwendung des wenigstens einen Installationsschutzprofils, das erlaubte und/oder verbotene Modifikationen auf der Laufzeitumgebung während des Installationsvorgangs festlegt,
c) Überprüfen, ob der Installationsvorgang unter Einhaltung des Installationsschutzprofils durchgeführt worden ist,
d) Durchführung des Installationsvorgangs des zu installierenden Installationspakets auf der Laufzeitumgebung, wenn das Überprüfungsergebnis als positiv bewertet wird,
e) ansonsten Abweisen oder Abbrechen des Installationsvorgangs.

2. Verfahren nach dem vorhergehenden Anspruch, **dadurch gekennzeichnet, dass** das Konfigurieren von wenigstens einem Installationsschutzprofil (AIIP) mit Hilfe von im Installationspaket umfassten Metadaten und/oder mit Hilfe von Zuständen und/oder Rechten der Laufzeitumgebung und/oder des Systems durchgeführt wird.

3. Verfahren nach einem der vorhergehenden Ansprüche, **dadurch gekennzeichnet, dass** die Prüflaufzeitumgebung auf dem System isoliert von der Laufzeitumgebung bereitgestellt wird.

4. Verfahren nach einem der vorhergehenden Ansprüche, **dadurch gekennzeichnet, dass** die Prüflaufzeitumgebung abgesetzt vom System auf einem anderen System (AIVS) bereitgestellt wird.

5. Verfahren nach einem der vorhergehenden Ansprüche, **dadurch gekennzeichnet, dass** die Durchführung des Installationsvorgangs mit Hilfe einer oder mehreren mit dem Installationsschutzprofil (AIIP) konfigurierbaren Installationssteuerungseinheiten (AIL) kontrolliert wird.

6. Verfahren nach einem der vorhergehenden Ansprüche, **dadurch gekennzeichnet, dass** das Überprüfungsergebnis kryptographisch attestiert wird.

7. Verfahren nach einem der vorhergehenden Ansprüche, **dadurch gekennzeichnet, dass** das Überprüfungsergebnis aus einem von der Prüflaufzeitumgebung erstellten Protokoll zu durchgeführten Modifikationen während des Installationsvorgangs abgeleitet wird.

8. System geeignet zur Durchführung eines Installationsvorgangs für eine Anwendung (APP) auf einer Systemlaufzeitumgebung während des Betriebs eines Systems (S) unter Überprüfung von während des Installationsvorgangs durchzuführenden Modifikationen auf der Laufzeitumgebung (P), wobei das System derart ausgebildet ist, die Schritte a) bis e) des Anspruchs 1 durchzuführen.

9. Computerprogrammprodukt umfassend ein nichtflüchtiges Speichermedium, auf dem ein ladbarer und ausführbarer Programmkode oder verteilt ladbare und ausführbare Programmkodemodule gespeichert sind, welches oder welche das Verfahren nach einem der vorhergehenden Verfahrensansprüchen auf einem oder mehreren Prozessoren eines Systems nach einem der vorhergehenden Systemansprüche ausführt.
